**Europäisches Patentamt**

**European Patent Office**

**Office européen des brevets**

(11) Veröffentlichungsnummer: **0 294 502**
**B1**

# EUROPÄISCHE PATENTSCHRIFT

(45) Veröffentlichungstag der Patentschrift:
**21.02.90**

(51) Int. Cl.⁴: **C03C 8/02**, C03C 8/04

(21) Anmeldenummer: **87108365.5**

(22) Anmeldetag: **10.06.87**

(54) **Nichttoxische Glasfritten.**

(43) Veröffentlichungstag der Anmeldung:
**14.12.88 Patentblatt 88/50**

(45) Bekanntmachung des Hinweises auf die Patenterteilung:
**21.02.90 Patentblatt 90/8**

(84) Benannte Vertragsstaaten:
**AT BE CH DE ES FR GB GR IT LI LU NL SE**

(56) Entgegenhaltungen:
**EP-A- 0 077 219**
**DE-A- 3 405 708**
**US-A- 2 474 636**

(73) Patentinhaber: **Degussa Aktiengesellschaft,
Weissfrauenstrasse 9, D-6000 Frankfurt am Main 1(DE)**

(72) Erfinder: **Merigaud, Bernard, Le Triadour
Saint-Martin-de-Terresus,
F-87400 Saint-Leonard-De-Noblat(FR)**
Erfinder: **Claus, Michel, Les Hauts d'Envaud,
F-87110 Solignac(FR)**

## Beschreibung

Die Erfindung betrifft nichttoxische Glasfritten, die frei von Bestandteilen aus Blei, Kadmium, Zink und Barium sind, eine gute Beständigkeit gegen Säuren und und Alkalien aufweisen und einen Erweichungspunkt von weniger als 535° C besitzen.

Zum Emaillieren und Dekorieren von Gebrauchsgeschirr aus Glas, Glaskeramik und Keramik werden Glasfritten benötigt. Diese Glasfritten werden gegebenenfalls vermischt mit einem Farbpigment auf die Unterlage aufgebracht und bei Temperaturen zwischen 550 und 700° C eingebrannt. Besonders zum Dekorieren von Glasgeschirr werden Glasfritten benötigt, die einen möglichst niedrigen Erweichungspunkt besitzen, damit sich beim Einbrennen des Glasurüberzugs die Unterlage nicht verformt.

Man verwendet daher meist Glasfritten, die merkliche Mengen von Bleioxid und oft auch Kadmiumoxid, Zinkoxid und/oder Bariumoxid enthalten. Diese Glasbestandteile sind allerdings hochtoxisch, wenn sie durch Einwirkung von Säuren, Alkalien oder kochendes Wasser aus der Glasurschicht herausgelöst werden.

Man benötigt daher zum Emaillieren und Dekorieren von Haushaltsgeschirr Glasfritten, die einen möglichst niedrigen Erweichungspunkt aufweisen und gleichzeitig sehr beständig gegen die Einwirkung von Säuren und Alkalien sind. Die Kombination beider Eigenschaften in einer Glassorte ist allerdings nur sehr schwer erreichbar.

Glasfritten mit niedriger Erweichungstemperatur sind meist nicht chemikalienbeständig und umgekehrt.

Aus der EP-OS 0 025 187 sind bleifreie Galsfritten bekanntgeworden, die einen Erweichungspunkt unterhalb 475° C aufweisen und auch gegen kochendes Wasser relativ beständig sind, nicht jedoch gegen die Einwirkung von Säuren und Alkalien. Sie enthalten 35 bis 55 % Kieselsäure, 13 bis 24 % Alkalioxid, 14 bis 27 % Boroxid, 2 bis 8 % Aluminiumoxid, 0,75 bis 4 % Fluorid und vorzugsweise 7 bis 11 % Zinkoxid. Durch Zusatz von bis zu 4 % Zirkoniumoxid lässt sich die Alkalibeständigkeit verbessern. Ihr thermischer Ausdehnungskoeffizient von größer $98 \cdot 10^{-7}$ °C$^{-1}$ ist sehr hoch.

In den DE-OSen 35 14 528 und 35 14 749 werden Glasfritten beschrieben, die frei von toxischen Bestandteilen sind und eine gute Beständigkeit gegen Säuren und Alkalien zeigen. Nachteilig ist jedoch ihr relativ hoher Erweichungspunkt, der oberhalb 535° C liegt. Diese Glasfritten enthalten entweder 48 bis 57 % Wismutoxid, 29 bis 38 % Kieselsäure, 3 bis 8 % Boroxid und 2 bis 8 % Alkalioxid, oder 25 bis 32 % Kieselsäure, 25 bis 32 % Boroxid, 10 bis 18 % Zirkoniumoxid, 10 bis 18 % Oxide der Seltenen Erden und 0 bis 9 % Lithiumoxid. Der hohe Schmelzpunkt dieser Glasfritten schränkt ihre Anwendungsmöglichkeit beträchtlich ein.

Es war Aufgabe der vorliegenden Erfindung, nicht toxische Glasfritten zu entwickeln, die frei von Bestandteilen aus Blei, Kadmium, Zink und Barium sind, eine gute Beständigkeit gegen Säuren und Alkalien aufweisen und einen Erweichungspunkt von weniger als 535°C besitzen.

Diese Aufgabe wird erfindungsgemäß dadurch gelöst, daß sie im wesentlichen aus 20 bis 40 Gew. % Kieselsäure, 18 bis 45 Gew. % Zirkoniumoxid, 15 bis 30 Gew. % Boroxid, 9 bis 15 Gew. % Lithiumoxid, je 0 bis 3 Gew. % Natrium- und/oder Kaliumoxid, 0 bis 10 Gew. % Titanoxid, je 0 bis 5 Gew. % Aluminiumoxid, Zinnoxid und/oder Magnesiumoxid und 0 bis 3 Gew. % Fluorid bestehen.

Als vorteilhaft haben sich Glasfritten der folgenden Zusammensetzung erwiesen: 20 bis 40 Gew. % Kieselsäure, 18 bis 45 Gew. % Zirkoniumoxid, 21 bis 25 Gew. % Boroxid, 9 bis 12 Gew. % Lithiumoxid, 2 bis 9 Gew. % Titanoxid, 1 bis 3 Gew. % Fluorid, 0 bis 5 Gew. % Aluminiumoxid und 0 bis 5 Gew. % Magnesiumoxid.

Diese Glasfritten eignen sich hervorragend für das Dekorieren von Gebrauchsgeschirr aus Glas, Glaskeramik und Keramik, da sie sehr beständig gegen Säuren und Alkalien sind und einen Erweichungspunkt zwischen 500 und 530°C besitzen. Der thermische Ausdehnungskoeffizient zwischen 0 und 300°C liegt im Bereich von 76 bis $87 \cdot 10^{-7}$ °C$^{-1}$ und ist daher den Unterlagen gut angepasst. Diese Glasfritten sind geeignet für Brennzyklen 580/630° C über 30 Minuten und 650/700° C zwischen 5 und 10 Minuten.

Die Besonderheit der erfindungsgemäßen Glasfritten liegt im hohen Zirkoniumoxidgehalt. Dadurch wird eine hohe Beständigkeit gegen Alkalien erzielt. Die eventuelle Anwesenheit von Titanoxid stärkt die Beständigkeit gegen Säuren.

Die Herstellung der Glasfritten erfolgt durch Zusammenschmelzen der Bestandteile bei 1150 bis 1200° C, Abschrecken in Wasser und mechanisches Zerkleinern.

Folgende Tabelle zeigt die Zusammensetzung einiger erfindungsgemäßer Glasfritten und deren Eigenschaften.

Tabelle

| | 1 | 2 | 3 | 4 | 5 | 6 | 7 | 8 |
|---|---|---|---|---|---|---|---|---|
| $SiO_2$..... | 20,60 | 26,75 | 30,90 | 31,20 | 31,20 | 34,00 | 37,10 | 38,10 |
| $ZrO_2$..... | 42,30 | 27,45 | 29,30 | 32,00 | 29,85 | 27,90 | 23,75 | 18,40 |
| $B_2O_3$..... | 23,90 | 23,30 | 24,80 | 21,70 | 21,70 | 23,60 | 21,45 | 23,40 |
| $Li_2O$..... | 10,25 | 11,10 | 11,80 | 10,35 | 9,80 | 11,25 | 11,50 | 11,10 |
| $TiO_2$..... | – | 5,95 | 3,20 | 2,75 | 4,15 | – | 3,10 | 9,00 |
| $Al_2O_3$.... | 1,40 | 2,65 | – | – | – | 1,55 | 0,80 | – |
| $MgO$...... | – | – | – | – | 0,75 | – | – | – |
| $F_2$....... | 1,55 | 2,80 | – | 2,00 | 2,60 | 1,70 | 2,30 | – |
| thermischer Ausdehungskoeffizient $\alpha_0^{300} \cdot 10^{-7} [^\circ C^{-1}]$ | 81 | 87 | 80 | 77 | 76 | 81 | 76 | 79 |
| Erweichungspunkt $[^\circ C]$ | 500 | 500 | 525 | 500 | 510 | 510 | 500 | 530 |

EP 0 294 502 B1

EP 0 294 502 B1

Die gute Beständigkeit gegen Säuren und Alkalien ergeben sich aus folgenden Versuchen:
Eine Glasfritte der Zusammensetzung gemäß Beispiel 1 wird bei 600° C gebrannt und dann 24 Stunden bei 20° C einer 4 %-igen Essigsäurelösung ausgesetzt. Der Gewichtsverlust beträgt rund 3 %. Ein Gewichtsverlust von etwa 150 mg/dm² Oberfläche ergibt sich nach einer sechsstündigen Behandlung bei 20° C in einer 9 %-igen Natronlauge, die 10 g/l Trinatriumphosphat enthielt. In der Geschirrspülmaschine werden die Fritten von den üblichen Spülmitteln nicht sichtbar angegriffen.

**Patentansprüche für die Vertragsstaaten AT, BE, CH, DE, FR, GB, GR, IT, LI, LU, NL, SE**

1. Nichttoxische Glasfritten, die frei von Bestandteilen aus Blei, Kadmium, Zink und Barium sind, eine gute Beständigkeit gegen Säuren und Alkalien aufweisen und einen Erweichungspunkt von weniger als 535° C besitzen,
dadurch gekennzeichnet,
daß sie im wesentlichen aus 20 bis 40 Gew. % Kieselsäure, 18 bis 45 Gew. % Zirkoniumoxid, 15 bis 30 Gew. % Boroxid, 9 bis 15 Gew. % Lithiumoxid, je 0 bis 3 Gew. % Natrium- und/oder Kaliumoxid, 0 bis 10 Gew. % Titanoxid, je 0 bis 5 Gew. % Aluminiumoxid, Zinnoxid und/oder Magnesiumoxid und 0 bis 3 Gew. % Fluorid bestehen.

2. Nichttoxische Glasfritten nach Anspruch 1,
dadurch gekennzeichnet,
daß sie aus 20 bis 40 Gew.% Kieselsäure, 18 bis 45 Gew.% Zirkoniumoxid, 2l bis 25 Gew. % Boroxid, 9 bis 12 Gew. % Lithiumoxid, 2 bis 9 Gew. % Titanoxid, 1 bis 3 Gew.% Fluorid, 0 bis 5 Gew. % Aluminiumoxid und 0 bis 5 Gew. % Magnesiumoxid bestehen.

**Patentansprüche für den Vertragsstaat ES**

1. Verwendung nichttoxischer Glasfritten, die frei von Bestandteilen aus Blei, Kadmium, Zink und Barium sind, eine gute Beständigkeit gegen Säuren und Alkalien aufweisen und einen Erweichungspunkt von weniger als 535°C besitzen, zum Dekorieren von Gebrauchsgeschirr aus Glas, Glaskeramik und Keramik, dadurch gekennzeichnet, daß die Glasfritten im wesentlichen aus 20 bis 40 Gew.-% Kieselsäure, 18 bis 45 Gew.-% Zirkoniumoxid, 15 bis 30 Gew.-% Boroxid, 9 bis 15 Gew.-% Lithiumoxid, je 0 bis 3 Gew.-% Natrium- und/oder Kaliumoxid, 0 bis 10 Gew.-% Titanoxid, je 0 bis 5 Gew.-% Aluminiumoxid, Zinnoxid und/oder Magnesiumoxid und 0 bis 3 Gew.-% Fluorid bestehen.

2. Verwendung nach Anspruch 1, dadurch gekennzeichnet, daß die Glasfritten aus 20 bis 40 Gew.-% Kieselsäure, 18 bis 45 Gew.-% Zirkoniumoxid, 21 bis 25 Gew.-% Boroxid, 9 bis 12 Gew.-%, Lithiumoxid, 2 bis 9 Gew.-% Titanoxid, 1 bis 3 Gew.-% Fluorid, 0 bis 5 Gew.-% Aluminiumoxid und 0 bis 5 Gew.-% Magnesiumoxid bestehen.

**Claims for the Contracting States AT, BE, CH, DE, FR, GB, GR, IT, LI, LU, NL, SE**

1. Non-toxic glass frits that are free of the constituents lead, cadmium, zinc and barium, have good acid and alkali resistance, and have a softening point of less than 535°C, characterized in that they essentially consist of 20 to 40% by weight silicic acid, 18 to 45% by weight zirconium dioxide, 15 to 30% by weight boron oxide, 9 to 15% by weight lithium oxide, 0 to 3% by weight sodium oxide and/or potassium oxide, 0 to 10% by weight titanium dioxide, 0 to 5% by weight aluminium oxide, tin oxide and/or magnesium oxide and 0 to 3% by weight fluoride.

2. Non-toxic glass frits according to claim 1, characterised in that they consist of 20 to 40% by weight silicic acid, 18 to 45% by weight zirconium dioxide, 21 to 25% by weight boron oxide, 9 to 12% by weight lithium oxide, 2 to 9% by weight titanium dioxide, 1 to 3% by weight fluoride, 0 to 5% by weight aluminium oxide and 0 to 5% by weight magnesium oxide.

**Claims for the Contracting State ES**

1. Use of non-toxic glass frits that are free of the constituents lead, cadmium, zinc and barium, have good acid and alkali resistance, and have a softening point of less than 535°C, for the decoration of service ware made of glass, glass-ceramic and/or ceramic, characterised in that the glass frits essentially consist of 20 to 40% by weight silicic acid, 18 to 45% by weight zirconium oxide, 15 to 30% by weight boron oxide, 9 to 15% by weight lithium oxide, 0 to 3% by weight sodium oxide and/or potassium oxide, 0 to 10% by weight titanium dioxide, 0 to 5% by weight aluminium oxide, tin oxide and/or magnesium oxide and 0 to 3% by weight fluoride.

2. Use according to claim 1, characterised in that the glass frits consist of 20 to 40% by weight silicid acid, 18 to 45% by weight zirconium oxide, 21 to 25% by weight boron oxide, 9 to 12% by weight lithium oxide, 2 to 9% by weight titanium dioxide, 1 to 3% by weight fluoride, 0 to 5% by weight aluminium oxide and 0 to 5% by weight magnesium oxide.

4

**Revendications pour les Etats contractants AT, BE, CH, DE, FR, GB, GR, IT, LI, LU, NL, SE**

1. Frittes en verre non toxiques, qui sont dépourvues de constituants à base de plomb, cadmium, zinc de baryum, qui manifestent une bonne stabilité vis-à-vis des acides et des alcalis et possèdent un point de ramollissement de moins de 535°C, caractérisées en ce qu'elles se composent essentiellement de 20 à 40% en poids d'acide silicique, 18 à 45% en poids d'oxyde de zirconium, 15 à 30% en poids d'oxyde de bore, 9 à 19% en poids d'oxyde de lithium, chacun de 0 à 3% en poids d'oxyde de sodium et/ou de potassium, 0 à 10% en poids d'oxyde de titane, chacun 0 à 5% en poids d'oxyde d'aluminium, oxyde d'étain et/ou d'oxyde de magnésium et 0 à 3% en poids de fluorure.

2. Frittes en verre non toxiques selon la revendication 1, caractérisées en ce qu'elles se composent de 20 à 40% en poids d'acide silicique, 18 à 45% en poids d'oxyde de zirconium, 21 à 25% d'oxyde de bore, 9 à 12% en poids d'oxyde de lithium, 2 à 9% en poids d'oxyde de titane, 1 à 3% en poids de fluorure, 0 à 5% en poids d'oxyde d'aluminium et 0 à 5% en poids d'oxyde de magnésium, d'étain et/ou d'oxyde de magnésium et de 0 à 3% en poids de fluorure.

**Revendications pour l'Etat contractant ES**

1. Utilisation de frittes en verre non toxiques, qui sont dépourvues de constituants à base de plomb, cadmium, zinc et baryum, qui manifestent une bonne stabilité vis-à-vis des acides et des alcalis et possèdent un point de ramollissement de moins de 535°C, pour la décoration de pièces de vaisselles en verre, en vitrocéramique ou en céramique, caractérisées en ce qu'elles se composent essentiellement de 20 à 40% en poids d'acide silicique, 18 à 45% en poids d'oxyde de zirconium, 15 à 30% en poids d'oxyde de bore, 9 à 15% en poids d'oxyde de lithium, chacun de 0 à 3% en poids d'oxyde de sodium et/ou de potassium, 0 à 10% en poids d'oxyde de titane, chacun 0 à 5% en poids d'oxyde d'aluminium, oxyde d'étain et/ou d'oxyde de magnésium et 0 à 3% en poids de fluorure.

2. Utilisation de frittes en verre non toxiques selon la revendication 1, caractérisées en ce qu'elles se composent de 20 à 40% en poids d'acide silicique, 18 à 45% en poids d'oxyde de zirconium, 21 à 25% en poids de bore, 9 à 12% en poids d'oxyde de lithium, 2 à 9% en poids d'oxyde de titane, 1 à 3% en poids de fluorure, 0 à 5% en poids d'oxyde d'aluminium et 0 à 5% en poids d'oxyde de magnésium, d'étain et/ou d'oxyde de magnésium et de 0 à 3% en poids de fluorure.